# EUROPEAN PATENT APPLICATION

(11) **EP 4 296 549 A1**
(43) Date of publication of application: **27.12.2023**
(21) Application number: 22815142.9
(22) Date of filing: 26.05.2022
(51) Int. Cl.: F16K 11/00

(54) **INTEGRATED VALVE GROUP MODULE AND VEHICLE HAVING SAME**

(30) Priority: 31.05.2021 CN 202121199350 U
(71) Applicant: BYD Company Limited, Shenzhen, Guangdong 518118 (CN)
(72) Inventor: LI, Shibai, Shenzhen, Guangdong 518118 (CN); XU, Min, Shenzhen, Guangdong 518118 (CN); JIN, Wei, Shenzhen, Guangdong 518118 (CN); YE, Meijiao, Shenzhen, Guangdong 518118 (CN); ZHANG, Jianjun, Shenzhen, Guangdong 518118 (CN)
(74) Representative: Arnold & Siedsma
(86) International application number: PCT/CN2022/095214
(87) International publication number: WO 2022/253096

(57) **Abstract**

A valve group integration module and a vehicle are provided. The valve group integration module includes a body (10) and a valve group (17). The body (10) includes a first branch body (1) and a second branch body (2). The first branch body (1) includes a first connecting surface (110); the second branch body (2) includes a second connecting surface (220); and the first connecting surface (110) is hermetically connected to the second connecting surface (220). Multiple internal flow channels are arranged inside the first branch body (1). Furthermore, at least one groove is arranged on the first connecting surface (110) of the first branch body (1). The second connecting surface (220) and each groove on the first branch body (1) form an external flow channel. The valve group (17) includes multiple valves. The valves are selectively communicated to the internal flow channels and the external flow channel to form different fluid flow channels.

## Description

### CROSS REFERENCE TO RELATED APPLICATIONS

This application claims priority to Chinese Patent Application No. 202121199350.7, entitled "VALVE GROUP INTEGRATION MODULE" and filed on May 31, 2021. The entire content of the above-referenced application is incorporated herein by reference.

### FIELD

The present disclosure relates to the field of vehicle technologies, and specifically, to a valve group integration module and a vehicle with the same.

### BACKGROUND

A heat pump air-conditioning system is an important component of an automobile. The heat pump air-conditioning system can change a temperature environment inside the automobile to provide a good driving experience for both drivers and passengers. Respective components in a heat pipe system in the related art are connected through pipelines. An electronic expansion valve, a dehumidification valve, a filter valve, a high-pressure check valve, and a low-pressure check valve are connected and scattered on the pipelines. This design has technical defects such as complex pipeline layout, large space occupation, difficulty in maintenance, and difficulty in assembling.

### SUMMARY

The present disclosure aims to provide a valve group integration module. The valve group integration module integrates various valves with flowing channels, which is conductive to simplifying a structure of a vehicle heat management system, reducing a space occupied by the valve group integration module, and reducing the costs.

The present disclosure further aims to provide a vehicle with the above valve group integration module.

In order to achieve the above objective, the present disclosure provides a valve group integration module, including a body and a valve group. The body includes a first branch body and a second branch body. The first branch body includes a first connecting surface. The second branch body includes a second connecting surface. The first connecting surface is hermetically connected to the second connecting surface.

Multiple internal flow channels are arranged inside the first branch body. Furthermore, at least one groove is arranged on the first connecting surface of the first branch body. The second connecting surface and each groove on the first branch body form an external flow channel.

The valve group includes multiple valves. The valves are selectively communicated to the internal flow channels and the external flow channel to form different fluid flow channels.

Optionally, the first branch body is of a plate-like structure.

Optionally, the second branch body is of a plate-like structure.

Optionally, a thickness of the first branch body is greater than a thickness of the second branch body.

Optionally, the second branch body completely covers the groove on the first branch body.

Optionally, the multiple valves are all mounted on the first branch body, or the multiple valves are mounted on the first branch body and the second branch body.

Optionally, the valves are plugged onto the first branch body.

Optionally, the first branch body is provided with multiple mounting screw holes, and the multiple valves are screwed to the corresponding mounting screw holes.

Optionally, the valve group integration module further includes a first interface member mounted on the second branch body. The second branch body is provided with a through hole. One end of the through hole is communicated to the fluid flow channels; and another end of the through hole is communicated to the first interface member.

Optionally, another end of the first interface member is connected to an external heat management component to communicate the fluid flow channels with the external heat management component.

Optionally, the valve group integration module further includes a second interface member arranged on the first branch body; one end of the second interface member is communicated to the internal flow channels on the first branch body; and another end of the second interface member is connected to the external heat management component to communicate the fluid flow channels with the external heat management component.

Optionally, the groove is a curved groove or a linear groove.

Due to the above technical solutions, when the first branch body and the second branch body abut against each other, the second connecting surface of the second branch body covers the first connecting surface of the first branch body, and a part of the second connecting surface that covers an opening of the groove is enclosed with a groove wall of the groove to form the external flow channel. Furthermore, the valves are selectively connected to the internal flow channels and the external flow channel. In this case, fluid can flow in the fluid flow channels formed by the internal flow channels and the external flow channel corresponding to the valves. That is, the same external flow channel can be communicated to the multiple internal flow channels respectively to form the fluid flow channels, and the multiple internal flow channels share the same external flow channel. Therefore, a quantity of flow channels formed in the valve group integration module may be reduced. On the one hand, it is conductive to reducing connecting pipelines in the vehicle heat management system and holders that are configured to mount the respective valves; assembling of the valves is facilitated; and the integration degree of the valve group integration module can be improved, thereby reducing an arrangement space of an entire vehicle, which is beneficial to a lightweight design of an entire vehicle. Meanwhile, since a quantity of components is reduced, a weight of the valve group integration module can be reduced, thereby reducing the costs and the fuel consumption.

In addition, since the at least one groove is formed in the outer surface of the first branch body, it is convenient to process the groove on the first branch body. The groove may be flexibly arranged to adapt to different vehicle models, and this facilitates subsequent maintenance of the external flow channel. In addition, the groove is formed in the outer surface of the first branch body, it is more convenient to arrange the position of the groove during the designing of the groove. Thus, a space of the first branch body may be used to a greater extent, which further improves the integration degree of the valve group integration module.

The present disclosure provides a vehicle, including the valve group integration module according to any of the above embodiments.

Other features and advantages of the present disclosure will be described in detail in the following detailed description.

### BRIEF DESCRIPTION OF THE DRAWINGS

The accompanying drawings are intended to provide a further understanding of the present disclosure and constitute a part of this specification. The accompanying drawings and specific implementations below are used together for explaining the present disclosure rather than constituting a limitation on the present disclosure. In the accompanying drawings:
FIG. 1 is a schematic diagram of an exploded state of a valve group integration module according to some implementations of the present disclosure;
FIG. 2 is a schematic diagram of a front view of a first branch body of a valve group integration module according to some implementations of the present disclosure;
FIG. 3 is a schematic three-dimensional diagram of a second branch body of a valve group integration module according to some implementations of the present disclosure;
FIG. 4 is a schematic three-dimensional diagram of a second branch body of a valve group integration module according to some implementations of the present disclosure in another perspective;
FIG. 5 is a schematic three-dimensional diagram of a valve group integration module according to some implementations of the present disclosure;
FIG. 6 is a schematic three-dimensional diagram of a valve group integration module according to some implementations of the present disclosure in another perspective;
FIG. 7 is a schematic structural diagram of a vehicle heat management system according to some implementations of the present disclosure; and
FIG. 8 is a schematic structural diagram of a vehicle heat management system according to some other implementations of the present disclosure, where a first switching valve and a first expansion valve are integrated into a whole.

### Descriptions of reference numerals:

10: body; 1: first branch body; 1A: external flow channel; 11: first external flow channel; 12: second external flow channel; 13: third external flow channel; 14: fourth external flow channel; 15: fifth external flow channel; 16: mounting screw hole; 17: valve group; 110: first connecting surface; 2: second branch body; 21: first switching valve; 22: second switching valve; 23: third switching valve; 24: fourth switching valve; 25: fifth switching valve; 26: sixth switching valve; 220: second connecting surface; 31: first expansion valve; 32: second expansion valve; 33: third expansion valve; 41: first check valve; 42: second check valve; 51: first interface member; 52: through hole; 71: first PT sensor; 72: second PT sensor; 100: valve group integration module; 200: interior condenser; 300: exterior heat exchanger; 400: interior evaporator; 500: battery pack heat exchanger; 600: compressor; 700: motor heat exchanger; and 800: gas-liquid separator.

### DETAILED DESCRIPTION

Specific implementations of the present disclosure are described in detail below with reference to the accompanying drawings. It should be understood that the specific implementations described herein are merely used to describe and explain the present disclosure, but are not intended to limit the present disclosure.

In the absence of a contrary statement, "inside and outside" mean being inside and outside relevant components. In addition, the terms "first", "second", and the like are only for the purpose of distinguishing, and may not be understood as indicating or implying the relative importance.

In addition, in the description of the present disclosure, it should be also noted that unless otherwise explicitly specified or defined, the terms such as "arrange", "connect", and "mount" should be understood in a broad sense. For example, the connection may be a fixed connection, a detachable connection, an integral connection, a direct connection, an indirect connection through an intermediate, or an internal communication between two elements. A person of ordinary skill in the art can understand the specific meanings of the above terms in the present disclosure according to specific situations.

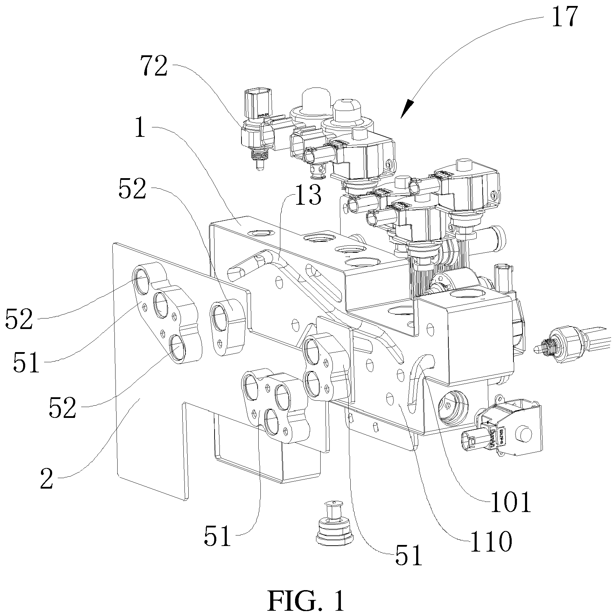

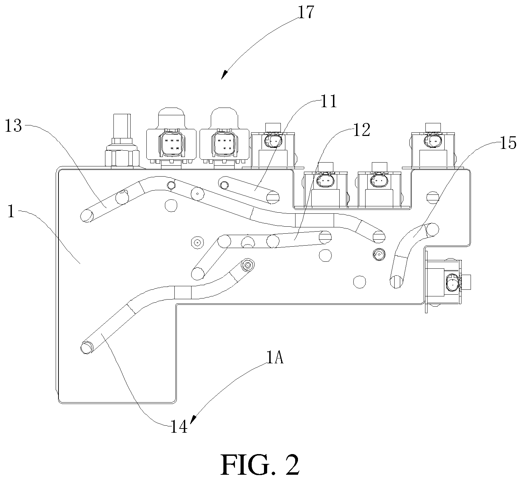

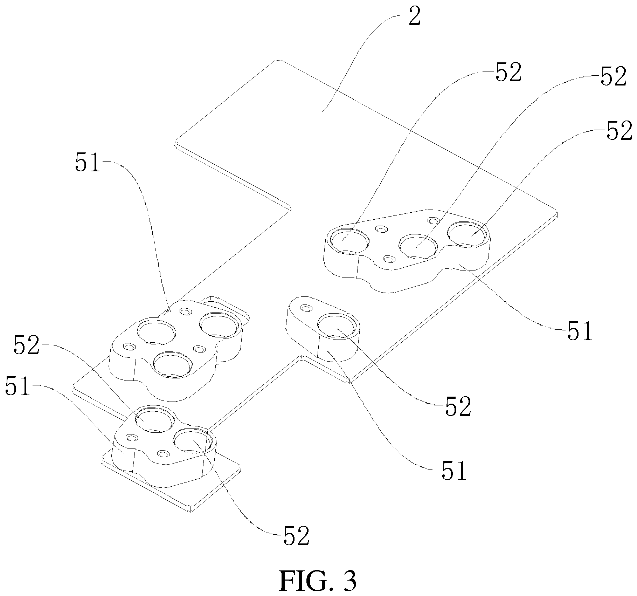

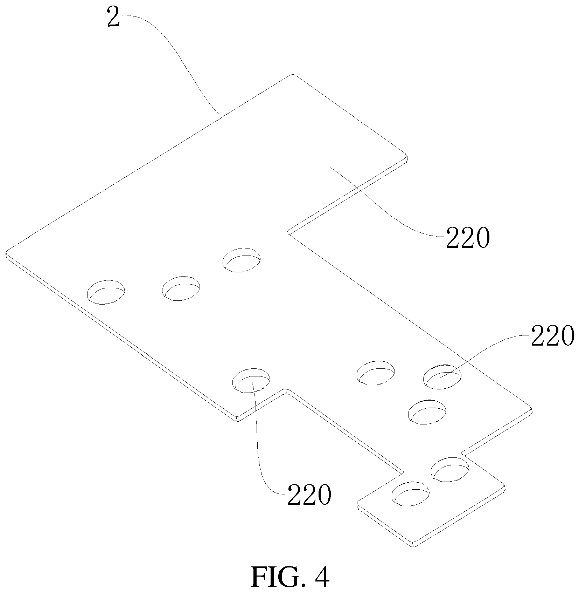

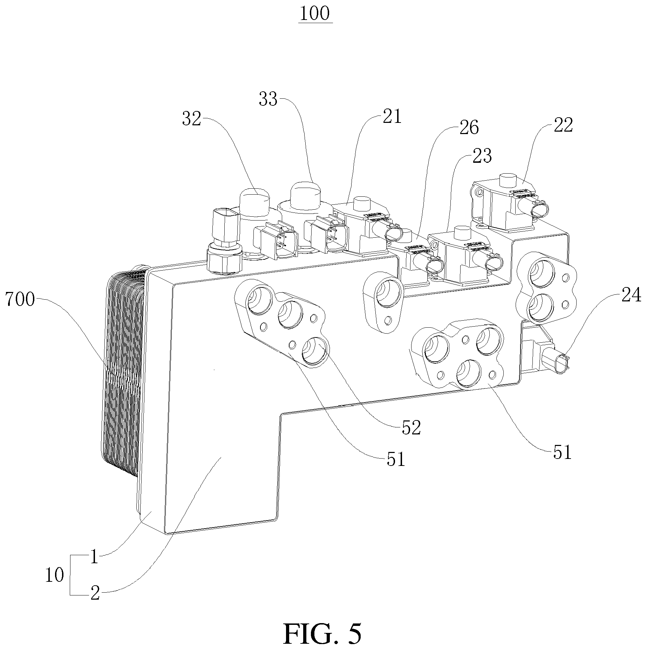

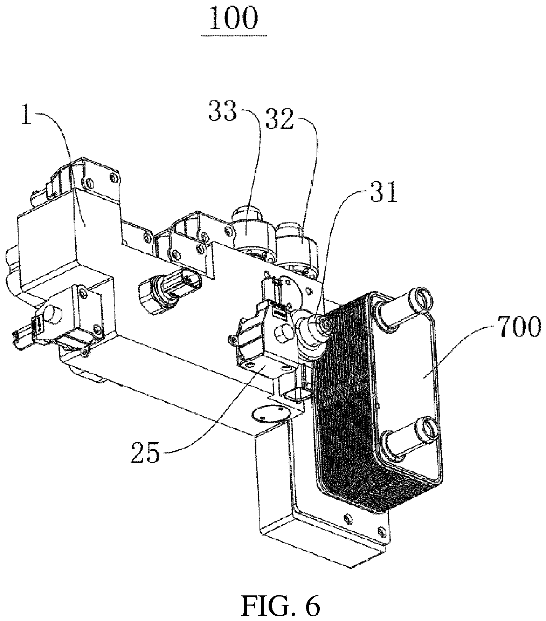

With reference to FIG. 1 to FIG. 8, in order to achieve the above objective, the present disclosure provides a valve group integration module 100. The valve group integration module 100 includes a body 10 and a valve group 17. The body 10 includes a first branch body 1 and a second branch body 2. The first branch body 1 includes a first connecting surface 110. The second branch body 2 includes a second connecting surface 220. The first connecting surface 110 is hermetically connected to the second connecting surface 220. Multiple internal flow channels are arranged inside the first branch body 1. Furthermore, at least one groove 101 is arranged on the first connecting surface 110 of the first branch body 1. The second connecting surface 220 and each groove on the first branch body 1 form an external flow channel 1A. The valve group 17 includes multiple valves. The valves are selectively communicated to the internal flow channels and the external flow channel 1A to form different fluid flow channels.

Due to the above technical solutions, when the first branch body 1 and the second branch body 2 abut against each other, the second connecting surface 220 of the second branch body 2 covers the first connecting surface 110 of the first branch body 1, and a part of the second connecting surface 220 that covers an opening of the groove 101 is enclosed with a groove wall of the groove to form the external flow channel 1A. Furthermore, the valves are selectively connected to the internal flow channels and the external flow channel 1A. In this case, fluid can flow in the fluid flow channels formed by the internal flow channels and the external flow channel 1A corresponding to the valves. That is, the same external flow channel can be communicated to the multiple internal flow channels respectively to form the fluid flow channels, and the multiple internal flow channels share the same external flow channel. Therefore, a quantity of flow channels formed in the valve group integration module 100 may be reduced. On the one hand, it is conductive to reducing connecting pipelines in a vehicle heat management system and holders that are configured to mount the respective valves; assembling of the valves is facilitated; and the integration degree of the valve group integration module 100 can be improved, thereby reducing an arrangement space of an entire vehicle, which is beneficial to a lightweight design of an entire vehicle. Meanwhile, since a quantity of components is reduced, a weight of the valve group integration module 100 can be reduced, thereby reducing the costs and the fuel consumption.

In addition, since the at least one groove 101 is formed in the outer surface of the first branch body 1, it is convenient to process the groove on the first branch body 1. The groove may be flexibly arranged to adapt to different vehicle models, and this facilitates subsequent maintenance of the external flow channel. In addition, the groove is formed in the outer surface of the first branch body 1, it is more convenient to arrange the position of the groove during the designing of the groove. Thus, a space of the first branch body 1 may be used to a greater extent, which further improves the integration degree of the valve group integration module 100.

In some implementations provided by the present disclosure, as shown in FIG. 1 to FIG. 6, the first branch body 1 and/or the second branch body 2 may be of a plate-like structure. The plate-like structure has a larger outer surface area, which is more convenient for the formation of the groove and the layout of a positional relationship of the groove. Furthermore, if both the first branch body 1 and the second branch body 2 are of the plate-like structures, when the first branch body 1 and the second branch body 2 are oppositely assembled with each other, the two branch bodies may be assembled more closely, so that the valve group integration module 100 is more compact in structure. Moreover, the fluid may also be prevented from leaking from a gap between the first branch body 1 and the second branch body 2 subsequently in the process of flowing in the external flow channel.

In other implementations provided in the present disclosure, the first branch body 1 and the second branch body 2 may also in any other shapes that meet the requirements, as long as their corresponding functions can be achieved. The present disclosure does not limit this.

In order to further improve the sealing between the first branch body 1 and the second branch body 2, a sealing film can also be added between the first branch body 1 and the second branch body 2.

As shown in FIG. 1 to FIG. 2, since the multiple internal flow channels and the groove are formed in the first branch body 1, optionally, a thickness of the first branch body 1 may be greater than a thickness of the second branch body 2. In this case, the first branch body 1 may have a larger space to arrange the internal flow channels and the groove. For the second branch body 2, in order to reduce a volume and weight of the valve group integration module 100, the thickness of the second branch body 2 may be as small as possible, as long as the functions of oppositely assembling the second branch body with the first branch body 1 and forming the external flow channel together with the first branch body 1 can be achieved.

In order to better form the external flow channel by the first branch body 1 and the second branch body 2, the second branch body 2 completely covers the groove on the first branch body 1. In this case, when the first branch body 1 and the second branch body 2 are oppositely assembled, the second branch body 2 can completely cover the groove on the first branch body 1, thereby ensuring that each groove may be sealed to form the above external flow channel.

In the present disclosure, as shown in FIG. 1 to FIG. 2 and FIG. 5, in order to facilitate cooperation between the valve group integration module 100 and the valve group, the multiple valves in the valve group 17 may be mounted on the first branch body 1, or the multiple valves may be mounted on the first branch body 1 and the second branch body 2. That is, specific positions for fixing the valves are not limited. That is, all the valves may be mounted on the first branch body 1, or some of the valves may be mounted on the first branch body 1, and the other valves may be mounted on the second branch body 2, thereby adding mounting regions for the valves and providing more feasible implementation solutions for subsequent matching with different vehicle models.

Optionally, in a case that the valves are mounted on the first branch body 1, the valves may be mounted on the first branch body 1 in a plugging manner. The valves are mounted in the plugging manner, which is convenient for disassembly. Pipeless connection to the fluid flow channels may be achieved. The sealing performance is better. In addition, the valves occupy a small space and have a lighter weight, which further facilitates the integration of the valve group integration module 100.

As shown in FIG. 1, in order to achieve detachable connection between the first branch body 1 and the valves, in some embodiments provided in the present disclosure, multiple mounting screw holes 16 may be arranged on the first branch body 1, and the multiple valves are screwed to the corresponding mounting screw holes 16.

In other implementations provided in the present disclosure, the first branch body 1 may also be connected to the valves through buckles, hinges, and the like. The present disclosure does not limit this.

It should be noted that, in this embodiment where the valves are mounted on the second branch body 2, detachable connection between the valves and the second branch body 2 may also be achieved in the above manners such as threads, buckles, and hinges.

Optionally, in order to facilitate connection between an external heat management component and the external flow channel formed by the first branch body 1 and the second branch body 2, as shown in FIG. 1, FIG. 3, FIG. 4, and FIG. 5, the valve group integration module 100 may also include a first interface member 51 mounted on the second branch body 2. The second branch body 2 is provided with a through hole 52. One end of the through hole 52 is communicated to the fluid flow channels, and another end of the through hole 52 is communicated to the first interface member 51. One end of the through hole 52 is communicated to the fluid flow channels. It should be noted here that, the through hole 52 may be communicated to the groove and the internal flow channels, or the through hole 52 may be communicated to the groove and the internal flow channels respectively. In short, the present disclosure does not limit this, as long as the through hole 52 may be communicated to the fluid flow channels.

In addition, due to the relatively simple structure of the second branch body 2, it is more convenient to process the through hole 52 on the second branch body 2. Moreover, compared with the through hole 52 arranged on the first branch body 1, the through hole 52 arranged on the second branch body 2 can be kept away from the internal flow channels and a groove arranged on the first branch body 1, and interference between the arrangement of the through hole 52 and the internal flow channels and the groove on the first branch body 1 can be avoided.

The first interface member 51 can be detachably connected to the second branch body 2. A fixing hole is arranged on the first interface member 51, and a fixing bolt is threaded inside the fixing hole. The first interface member 51 is fixed to the second branch body 2 through the fixing bolt.

In addition, since the through hole 52 does not need to be arranged on the first branch body 1, the structure of the first branch body 1 is simplified, making it easier to process the first branch body 1.

Here, the first interface member 51 may be detachably mounted on the second branch body 2, or may be integrally formed with the second branch body 2.

Optionally, another end of the first interface member 51 may be connected to the external heat management component to communicate the fluid flow channels with the external heat management component.

Optionally, the valve group integration module 100 may further include a second interface member arranged on the first branch body 1. One end of the second interface member is communicated to the internal flow channels on the first branch body 1, and another end of the second interface member is connected to the external heat management component, so as to communicate the fluid flow channels with the external heat management component.

In some implementations provided in the present disclosure, one end of the second interface member close to the first branch body 1 is communicated to the internal flow channel on the first branch body 1.

In other implementations provided in the present disclosure, the first interface member 51 may be arranged on the valves, and the first interface member 51 is communicated to the internal flow channels through the valves.

The external heat management component may include a compressor 600, an interior condenser 200, an exterior heat exchanger 300, an interior evaporator 400, a motor heat exchanger 700, a battery pack heat exchanger 500, and the like. The body 10 may be provided with an interface to achieve connection to a corresponding heat exchange component.

In order to facilitate connection with the external heat management component of an air-conditioning system, the body 10 may further be provided with a first interface, a second interface, a third interface, a fourth interface, a fifth interface, a sixth interface, a seventh interface, an eighth interface, a ninth interface, a tenth interface, and an eleventh interface.

The first interface is configured to be connected to an outlet of the compressor 600. The second interface is configured to be connected to an outlet of the interior condenser 200. The third interface is configured to be connected to an inlet of the exterior heat exchanger 300. The fourth interface is configured to be connected to an outlet of the exterior heat exchanger 300. The fifth interface is configured to be connected to an inlet of the interior evaporator 400. The sixth interface is configured to be connected to an outlet of the interior evaporator 400. The seventh interface is configured to be connected to a first opening of the battery pack heat exchanger 500. The eighth interface is configured to be connected to a second opening of the battery pack heat exchanger 500. The ninth interface is configured to be connected to a first opening of the motor heat exchanger 700. The tenth interface is configured to be connected to a second opening of the motor heat exchanger 700. The eleventh interface is configured to be connected to an inlet of a gas-liquid separator 800 of the air-conditioning system of a vehicle. Through the respective interfaces mentioned above and a coolant flow channel in the body 10, a coolant is transported between the body 10 and various external components, so as to achieve various working modes of vehicle heat management.

Optionally, the first interface may be communicated to the outlet of the compressor 600 and the inlet of the interior condenser 200 through a three-way valve.

In the present disclosure, the valve group 17 may include a first switching valve 21, a second switching valve 22, a third switching valve 23, a fourth switching valve 24, a fifth switching valve 25, a sixth switching valve 26, a first expansion valve 31, a second expansion valve 32, a third expansion valve 33, a first check valve 41, and a second check valve 42. Multiple heat management modes of an air conditioner can be achieved through breaking and throttling actions of different valves.

Optionally, in some implementations of the present disclosure, the valve group 17 may further include a first PT sensor 71 mounted on the body 10 and a second PT sensor 72 mounted on the motor heat exchanger 700. The body 10 may further be provided with a connecting hole. The first PT sensor 71 may be plugged and screwed into the connecting hole. The first PT sensor 71 may be configured to detect a coolant temperature and pressure at the outlet of the interior evaporator 400. The second PT sensor 72 may be configured to detect a coolant temperature and pressure fed back by the second outlet of the heat exchanger 700.

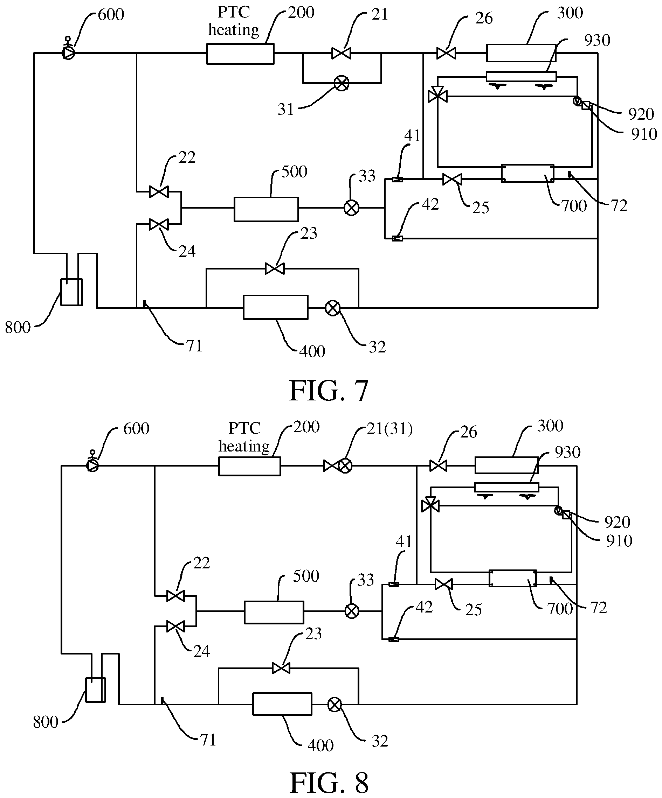

As shown in FIG. 7, an inlet of the first switching valve 21 and an inlet of the first expansion valve 31 are both configured to be connected to the outlet of the interior condenser 200. An outlet of the first switching valve 21 and an outlet of the first expansion valve 31 are both configured to be connected to the inlet of the exterior heat exchanger 300. An inlet of the second switching valve 22 is configured to be connected to the outlet of the compressor 600. An outlet of the second switching valve 22 is configured to be connected to the first opening of the battery pack heat exchanger 500. An inlet of the third switching valve 23 and an inlet of the second expansion valve 32 are both configured to be connected to an outlet of the exterior heat exchanger 300. An inlet of the fourth switching valve 24 is configured to be connected to the first opening of the battery pack heat exchanger 500. An outlet of the fourth switching valve 24 is configured to be connected to the gas-liquid separator 800. A first port of the third expansion valve 33 is configured to be connected to the second opening of the battery pack heat exchanger 500. The second opening of the battery pack heat exchanger 500 is connected to the motor heat exchanger 700 through the first check valve 41. The exterior heat exchanger 300 is connected to a second port of the third expansion valve 33 through the second check valve 42. An inlet of the fifth switching valve 25 is connected to the outlet of the first switching valve 21 and the outlet of the first expansion valve 31. An outlet of the fifth switching valve 25 is connected to the first opening of the motor heat exchanger 700. An inlet of the sixth switching valve 26 is connected to the outlet of the first switching valve 21 and the outlet of the first expansion valve 31. An outlet of the sixth switching valve 26 is connected to the inlet of the exterior heat exchanger 300.

As shown in FIG. 8, in some other implementations of the present disclosure, the first switching valve 21 and the first expansion valve 31 are integrated into a whole to form an electromagnetic electronic expansion valve. The electromagnetic electronic expansion valve has the functions of both the switching valve and the expansion valve.

In some implementations provided in the present disclosure, a first groove, a second groove, a third groove, a fourth groove, and a fifth groove may be formed in the first branch body 1. Correspondingly, the external flow channel may include a first external flow channel 11, a second external flow channel 12, a third external flow channel 13, a fourth external flow channel 14, and a fifth external flow channel 15. It should be noted that due to the fact that the external flow channels are invisible after the first branch body 1 and the second branch body 2 cooperate with each other, in order to facilitate understanding the distribution of the first external flow channel to the fifth external flow channel, such as positions and shapes, numeral positions of the first external flow channel to the fifth external flow channel in the figures are positions of the grooves.

The coolant flowing out of the outlet of the interior condenser 400 can enter the inlet of the first switching valve 21 or the inlet of the first expansion valve 31 through the first external flow channel 11. The coolant flowing out of the outlet of the first switching valve 21 or the outlet of the first expansion valve 31 can flow into the inlet of the fifth switching valve 25 or the inlet of the sixth switching valve 26 through the second external flow channel 12. The coolant flowing into the first branch body 1 from the outlet of the exterior heat exchanger 300 or an outlet of the motor heat exchanger 700 can flow into the inlet of the third switching valve 23 or the inlet of the second expansion valve 32 through the third external flow channel 13. In addition, the coolant flowing into the first branch body 1 from the outlet of the interior evaporator 400 and the coolant flowing out of an outlet of the third switching valve 23 can flow into the gas-liquid separator 800 through the third external flow channel 13. The coolant flowing out of the outlet of the fifth switching valve 25 can enter the motor heat exchanger 700 through the fourth external flow channel 14. The coolant flowing out of an outlet of the battery pack heat exchanger 500 can enter the gas-liquid separator through the fifth external flow channel 15.

The following will introduce in detail working processes of several typical working modes of the vehicle heat management system in some implementations of the present disclosure in conjunction with FIG. 7.

### Air-conditioning refrigeration mode

In this mode, a high-temperature and high-pressure gaseous coolant discharged by the compressor 600 enters the interior condenser 200. The coolant enters the body 10 through the second interface after releasing heat for liquefaction by the interior condenser 200. In this case, the first switching valve 21, the sixth switching valve 26, and the second expansion valve 32 are opened, while the second switching valve 22, the fifth switching valve 25, the first expansion valve 31, and the third expansion valve 33 are closed. In this way, the coolant can flow into the first switching valve 21 through the flow channel and enter the sixth switching valve 26 through the first switching valve 21 via the flow channel. The coolant flows into the third interface through a valve port of the sixth switching valve 26 and then enters the exterior heat exchanger 300 through the third interface. After being subjected to heat dissipation by the exterior heat exchanger 300, the coolant can flow to the fourth interface through a pipeline and then enter the body 10 again through the fourth interface. Afterwards, the coolant can enter the second expansion valve 32 through the flow channel. The coolant is throttled and depressurized in the second expansion valve 32. The atomized coolant enters the interior evaporator 400 through the fifth interface. After being vaporized for refrigeration in the interior evaporator 400, the coolant flowing out of the interior evaporator 400 enters the body 10 through the sixth interface and can flow into the eleventh interface through the flow channel and enter the gas-liquid separator 800 via the eleventh interface. Afterwards, the low-temperature and low-pressure gaseous coolant flows back to the compressor 600, thereby completing one air-conditioning refrigeration.

### Heat pump heating mode

In this mode, a coolant flows out of the compressor 600 and enters the interior condenser 200. The coolant releases heat in the interior condenser 200. The heat released by the condenser and an air heating positive temperature coefficient (PTC) thermistor are combined to heat a passenger cabin. The liquefied coolant enters the body 10 through the second interface. In this case, the first expansion valve 31, the fifth switching valve 25, and the third switching valve 23 are opened, while the sixth switching valve 26, the second expansion valve 32, and the third expansion valve 33 are closed. In this way, the coolant flows through the first expansion valve 31 via the flow channel into the motor heat exchanger 700 from the fifth switching valve 25. The coolant enters the body 10 after waste heat of the coolant is recycled in the motor heat exchanger 700, and the coolant enters the opened third switching valve 23 via the flow channel. The coolant enters the flow channel through the third switching valve 23 and enters the gas-liquid separator 800 through the eleventh interface. The coolant flowing through the gas-liquid separator 800 flows back to the compressor 600, thereby completing one heat pump heating.

### Battery heating mode

In this mode, a high-temperature and high-pressure gaseous coolant discharged by the compressor 600 enters the body 10 via the first interface. In this case, the second switching valve 22, the third expansion valve 33 (in a full open state), the fifth switching valve 25, and the second expansion valve 32 are opened, while the first switching valve 21, the first expansion valve 31, and the second expansion valve 32 are closed. In this way, after entering the first interface, the coolant flows through the second switching valve 22 and enters the battery pack heat exchanger 500 through the seventh interface. In this case, the high-temperature and high-pressure coolant enters the body 10 after heating a battery through the battery pack heat exchanger 500. Afterwards, the coolant flows through the first check valve 41 and the fifth switching valve 25 into the motor heat exchanger 700. The coolant enters the body 10 after waste heat of the coolant is recycled in the motor heat exchanger 700. Afterwards, the coolant enters the opened third switching valve 23 via the flow channel. The coolant enters the gas-liquid separator 800 through the third switching valve 23 via the flow channel. The coolant then flows through the gas-liquid separator 800 and flows back to the compressor 600, thereby completing one battery heating.

### Battery cooling mode

In this mode, a high-temperature and high-pressure gaseous coolant discharged by the compressor 600 enters the interior condenser 200. The coolant enters the body 10 through the second interface after releasing heat for liquefaction by the interior condenser 200. In this case, the first switching valve 21, the sixth switching valve 26, the third expansion valve 33, and the fourth switching valve 24 are opened, while the second switching valve 22, the fifth switching valve 25, the first expansion valve 31, and the second expansion valve 32 are closed. In this way, the coolant can flow into the first switching valve 21 through the flow channel and enter the sixth switching valve 26 through the first switching valve 21 via the flow channel. The coolant flows into the third interface through a valve port of the sixth switching valve 26 and then enters the exterior heat exchanger 300 through the third interface. After being subjected to heat dissipation by the exterior heat exchanger 300, the coolant can flow to the fourth interface through a pipeline and then enter the body 10 again through the fourth interface. Afterwards, the coolant enters the third expansion valve 33 through the flow channel via the first check valve 41. The coolant enters the battery pack heat exchanger 500 through the eighth interface after being throttled, cooled, and depressurized by the third expansion valve 33. A low-temperature and low-pressure coolant exchanges heat with a high-temperature battery in the battery pack heat exchanger 500 to cool the battery. The coolant from the battery pack heat exchanger 500 enters the fourth switching valve 24 through the ninth interface. The coolant flows through the fourth switching valve 24 into the gas-liquid separator 800 from the eleventh interface, and flows back to the compressor 600, thereby completing one battery cooling.

### Parallel mode of air-conditioning refrigeration and battery cooling

In this mode, a part of a high-temperature and high-pressure gaseous coolant discharged by the compressor 600 enters the interior condenser 200. The coolant enters the body 10 through the second interface after releasing heat for liquefaction by the interior condenser 200. In this case, the first switching valve 21, the sixth switching valve 26, the second expansion valve 32, the third expansion valve 33, and the fourth switching valve 24 are opened, while the first expansion valve 31, the second switching valve 22, the third switching valve 23, and the fifth switching valve 25 are closed. In this way, the coolant can flow into the first switching valve 21 through the flow channel and enter the sixth switching valve 26 through the first switching valve 21 via the flow channel. The coolant flows into the third interface through a valve port of the sixth switching valve 26 and then enters the exterior heat exchanger 300 through the third interface. After being subjected to heat dissipation by the exterior heat exchanger 300, the coolant can flow to the fourth interface through a pipeline and then enter the body 10 again through the fourth interface. Afterwards, a part of the coolant can enter the second expansion valve 32 through the flow channel. The coolant is throttled and depressurized in the second expansion valve 32. The atomized coolant enters the interior evaporator 400 through the fifth interface. After being vaporized for refrigeration in the interior evaporator 400, the coolant flowing out of the interior evaporator 400 enters the body 10 through the sixth interface and can flow into the eleventh interface through the flow channel and enter the gas-liquid separator 800 via the eleventh interface. Afterwards, the low-temperature and low-pressure gaseous coolant flows back to the compressor 600, thereby completing one air-conditioning refrigeration. Meanwhile, another part of the coolant enters the third expansion valve 33 through the flow channel via the second check valve 42. The coolant enters the battery pack heat exchanger 500 through the eighth interface after being throttled, cooled, and depressurized by the third expansion valve 33. The low-temperature and low-pressure coolant exchanges heat with the high-temperature battery in the battery pack heat exchanger 500 to cool the battery. The coolant from the battery pack heat exchanger 500 enters the fourth switching valve 24 through the ninth interface. The coolant flows through the fourth switching valve 24 into the gas-liquid separator 800 from the eleventh interface, and flows back to the compressor 600, thereby completing cooling of the battery. In this way, one air-conditioning refrigeration and battery cooling can be completed.

### Parallel mode of heat pump heating and battery heating

In this mode, the first expansion valve 31, the fifth switching valve 25, the second switching valve 22, the first check valve 41, and the third switching valve 23 are opened, while the first switching valve 21, the fourth switching valve 24, and the second expansion valve 32 are closed. In this way, a part of a high-temperature and high-pressure gaseous coolant flowing out of the compressor 600 enters the interior condenser 200. The coolant releases heat in the interior condenser 200. The heat released by the condenser and an air heating PTC thermistor are combined to heat a passenger cabin. The liquefied coolant enters the body 10 through the second interface. The coolant enters the flow channel through the flow channel via the first expansion valve 31. The coolant flows into the motor heat exchanger 700 via the fifth switching valve 25. The coolant enters the body 10 after waste heat of the coolant is recycled in the motor heat exchanger 700, and the coolant enters the opened third switching valve 23 via the flow channel. The coolant enters the flow channel through the third switching valve 23 and enters the gas-liquid separator 800 through the eleventh interface. The coolant flows through the gas-liquid separator 800 and flows back to the compressor 600, thereby completing one heat pump heating. Meanwhile, another part of the high-temperature and high-pressure gaseous coolant discharged by the compressor 600 enters the body 10 via the first interface. After entering the first interface, the coolant flows through the second switching valve 22 and enters the battery pack heat exchanger 500 through the seventh interface. In this case, the high-temperature and high-pressure coolant enters the body 10 after heating a battery through the battery pack heat exchanger 500. Afterwards, the coolant flows through the first check valve 41 and the fifth switching valve 25 into the motor heat exchanger 700. The coolant enters the body 10 from the tenth interface after waste heat of the coolant is recycled in the motor heat exchanger 700. Afterwards, the coolant enters the opened third switching valve 23 via the flow channel. The coolant enters the gas-liquid separator 800 through the third switching valve 23 via the flow channel. The coolant then flows through the gas-liquid separator 800 and flows back to the compressor 600, thereby completing one battery heating work. In this way, one heat pump heating and battery heating can be completed.

### Air-conditioning refrigeration and dehumidification mode

In this mode, a high-temperature and high-pressure gaseous coolant discharged by the compressor 600 enters the interior condenser 200. The coolant enters the body 10 through the second interface after releasing heat for liquefaction by the interior condenser 200. In this case, the first switching valve 21, the sixth switching valve 26, and the second expansion valve 32 are opened, while the second switching valve 22, the fifth switching valve 25, the first expansion valve 31, and the third expansion valve 33 are closed. In this way, the coolant can flow into the first switching valve 21 through the flow channel and enter the sixth switching valve 26 through the first switching valve 21 via the flow channel. The coolant flows into the third interface through a valve port of the sixth switching valve 26 and then enters the exterior heat exchanger 300 through the third interface. After being subjected to heat dissipation by the exterior heat exchanger 300, the coolant can flow to the fourth interface through a pipeline and then enter the body 10 again through the fourth interface. Afterwards, the coolant can enter the second expansion valve 32 through the flow channel. The coolant is throttled and depressurized in the second expansion valve 32. The atomized coolant enters the interior evaporator 400 through the fifth interface. After the coolant is vaporized for refrigeration in the interior evaporator 400, cold air may be blown into a vehicle through an air blower, which can also achieve the refrigeration mode. Meanwhile, if a dehumidification function is enabled, a dehumidification function can be achieved by condensing wet air after air circulated in the vehicle passes through the interior evaporator 400. Afterwards, the coolant flowing out of the interior evaporator 400 enters the body 10 through the sixth interface and can flow into the eleventh interface through the flow channel and enter the gas-liquid separator 800 via the eleventh interface. Afterwards, the low-temperature and low-pressure gaseous coolant flows back to the compressor 600. In this case, the air-conditioning refrigeration and dehumidification mode can be completed.

It can be understood that in the present disclosure, there is no restriction on a mounting direction of the valve group integration module 100. Optionally, when the valve group integration module 100 is mounted on a vehicle, the valve group integration module may be mounted vertically as shown in FIG. 1. The structures on a coolant side of the vehicle heat management system are located on a left side of the body 10, and the structures on a cooling fluid side of the vehicle heat management system are located on a right side of the body 10.

Optionally, the groove is a curved groove or linear groove, which makes the arrangement of the groove more flexible. Of course, the groove may also be of any other shapes. The present disclosure does not limit this.

The preferred implementations of the present disclosure are described in detail above with reference to the accompanying drawings. However, the present disclosure is not limited to the specific details in the foregoing implementations, various simple transformations may be made to the technical solutions of the present disclosure within a range of the technical concept of the present disclosure, and these simple transformations fall within the protection scope of the present disclosure.

It should be additionally noted that, the respective specific technical features described in the foregoing specific implementations may be combined in any proper manner without conflicts. In order to avoid unnecessary repetitions, the present disclosure will not additionally describe various possible combination manners.

In addition, various different implementations of the present disclosure may also be arbitrarily combined without departing from the idea of the present disclosure, and these combinations shall still be regarded as content disclosed in the present disclosure.

## Claims

1. A valve group integration module (100), comprising a body (10) and a valve group (17), wherein the body (10) comprises a first branch body (1) and a second branch body (2); the first branch body (1) comprises a first connecting surface (110); the second branch body (2) comprises a second connecting surface (220); the first connecting surface (110) is hermetically connected to the second connecting surface (220);
a plurality of internal flow channels are arranged inside the first branch body (1); at least one groove (101) is arranged on the first connecting surface (110) of the first branch body (1); the second connecting surface (220) and each groove on the first branch body (1) form an external flow channel (1A);
the valve group (17) comprises a plurality of valves; and the valves are selectively communicated to the internal flow channels and the external flow channel (1A) to form different fluid flow channels.

2. The valve group integration module (100) according to claim 1, wherein the first branch body (1) is of a plate-like structure.

3. The valve group integration module (100) according to claim 1 or 2, wherein the second branch body (2) is of a plate-like structure.

4. The valve group integration module (100) according to any one of claims 1 to 3, wherein a thickness of the first branch body (1) is greater than a thickness of the second branch body (2).

5. The valve group integration module (100) according to any one of claims 1 to 4, wherein the second branch body (2) completely covers the groove on the first branch body (1).

6. The valve group integration module (100) according to any one of claims 1 to 5, wherein the plurality of valves are all mounted on the first branch body (1), or the plurality of valves are mounted on the first branch body (1) and the second branch body (2).

7. The valve group integration module (100) according to claim 6, wherein the valves are plugged onto the first branch body (1).

8. The valve group integration module (100) according to claim 7, wherein the first branch body (1) is provided with a plurality of mounting screw holes, and the plurality of valves are screwed to the corresponding mounting screw holes.

9. The valve group integration module (100) according to any one of claims 1 to 8, wherein the valve group integration module (100) further comprises a first interface member (51) mounted on the second branch body (2); the second branch body (2) is provided with a through hole (52); one end of the through hole (52) is communicated to the fluid flow channels; and another end of the through hole (52) is communicated to the first interface member (51).

10. The valve group integration module (100) according to claim 9, wherein another end of the first interface member (51) is connected to an external heat management component to communicate the fluid flow channels with the external heat management component.

11. The valve group integration module (100) according to any one of claims 1 to 10, wherein the valve group integration module (100) further comprises a second interface member arranged on the first branch body (1); one end of the second interface member is communicated to the internal flow channels on the first branch body (1); and another end of the second interface member is connected to the external heat management component to communicate the fluid flow channels with the external heat management component.

12. The valve group integration module according to any one of claims 1 to 11, wherein the groove is a curved groove or a linear groove.

13. A vehicle, comprising the valve group integration module according to any one of claims 1 to 12.
